# EUROPEAN PATENT APPLICATION

(11) **EP 2 799 457 A1**
(43) Date of publication of application: **05.11.2014**
(21) Application number: 12862532.4
(22) Date of filing: 27.08.2012
(51) Int. Cl.: C08F 214/22, C08F 216/14, C08F 214/26, C08F 214/18, C08F 2/38, C08F 6/22

(54) **LOW-TEMPERATURE-RESISTANT FLUORINE-CONTAINING ELASTOMER AND PREPARATION METHOD THEREFOR**

(30) Priority: 29.12.2011 CN 201110451869
(71) Applicant: Zhonghao Chenguang Research Institute of Chemical Industry Co., Ltd., Zigong, Sichuan 643201 (CN)
(72) Inventor: ZHAO, Shaochun, Zigong Sichuan 643201 (CN); LAN, Jun, Zigong Sichuan 643201 (CN); ZHANG, Jianxin, Zigong Sichuan 643201 (CN); LIU, Bin, Zigong Sichuan 643201 (CN); LI, Bin, Zigong Sichuan 643201 (CN); GAO, Jiayong, Zigong Sichuan 643201 (CN); WANG, Xianrong, Zigong Sichuan 643201 (CN)
(74) Representative: Bülle, Jan
(86) International application number: PCT/CN2012/080606
(87) International publication number: WO 2013/097477

(57) **Abstract**

The present invention provides a low-temperature-resistant fluorine-containing elastomer formed through polymerization of the comonomers: 40-80 mol% 1,1-vinylidene fluoride, 2-10 mol% tetrafluoroethylene, 10-30 mol% perfluoro(alkyl vinyl ether), and 1-10 mol% vulcanization monomer. The present invention further provides a preparation method of the fluorine-containing elastomer. In the present invention, on basis of a large number of experiments, the contents of the comonomers of the fluorine-containing elastomer are adjusted, so that the low temperature performance thereof is significantly improved, and the low-temperature retraction temperature TR-10<-400. Moreover, the rate of the volume change of the fluorine-containing elastomer in methanol decreases, and the oil resistance and the solvent resistance are improved, thereby improving the oil resistant performance and solvent resistant performance of the fluorine-containing elastomer.

## Description

### Technical Field

The present invention relates to a low-temperature-resistant fluorine-containing elastomer, specifically, to a low-temperature-resistant fluorine-containing elastomer and a preparation method thereof.

### Background

Low-temperature-resistant fluororubber Viton GLT initially developed by DuPont Performance Elastomers is quadripolymer of vinylidene fluoride-tetrafluoroethylene-perfluoro(methyl vinyl ether) (PMVE) and 4-bromo-3,3,4,4-tetrafluoro-1-butene (BTFB), wherein BTFB is a crosslinking monomer. Copolymers with different fluorine contents can be obtained by adjusting copolymer composition, so that the copolymers have different medium resistance performance and low temperature performance. Compared with conventional fluororubber, the low-temperature-resistant fluororubber has improved low temperature resistance performance, and also excellent physical performance and processing performance. It can be widely applied in chemical reaction device sealing, chemical pipeline lining and fittings in various plants, sealing elements in semiconductor industry and special parts in automobile industry, petrochemical industry and aerospace industry.

US4418186 has disclosed a polymerization method of perfluoro (alkyl vinyl ether), vinylidene fluoride and a third monomer in the presence of ammonium persulfate initiator and emulsifier, wherein the third monomer is perfluoro (2-bromoethyl vinyl ether), and the emulsifier is ammonium perfluorononanoate. The resultant polymer is in the form of emulsion, and subjected to freezing, then washing and drying to obtain fluoroether rubber, the glass-transition temperature of which is (-21)-(-36)°C.

WO0149758A1 has disclosed fluoroether rubber prepared from perfluoro (methyl vinyl ether) or perfluoro (propyl vinyl ether) and VDF through free radical polymerization, wherein the initiator is peroxide, lipid peroxide or azoic compound, and the obtained elastomer has a glass-transition temperature Tg of -44°C.

US3136745 has disclosed fluoroether rubber prepared from perfluoro (methyl vinyl ether) or perfluoro (propyl vinyl ether) and VDF through free radical polymerization, wherein the initiator is ammonium persulfate, and the low-temperature retraction temperature TR-10 of the obtained product is (-28)-(-24)°C. If micro tetrafluoroethylene is added thereto, the low temperature resistant performance thereof can be significantly improved.

A document published by NASA in 1966 showes, under high pressure (p>1,000 atm), initiator AIBN (2,2'-azobisisobutyronitrile) is adopted to initiate the polymerization of VDF and monomer with general formula of CF₂=CFOCₙF₂ₙ₊₁ (n=1, 2, 3), and the glass-transition temperature Tg of the obtained elastomer is (-25)-(-20)°C.

In the present invention, on basis of a large number of experiments, the contents of the comonomers and auxiliaries of the low-temperature-resistant fluorine-containing elastomer are adjusted, so that the low temperature performance of the product is improved and the low-temperature retraction temperature TR-10 of the product can achieve < -40°C on the basis of guaranteeing good vulcanization performance and processing performance of the fluorine-containing elastomer.

### Summary of the Invention

One purpose of the present invention is to provide a low-temperature-resistant fluorine-containing elastomer, thereby overcoming the defects of the prior art.

Another purpose of the present invention is to provide a method for preparing the low-temperature-resistant fluorine-containing elastomer.

In order to achieve the purposes, the present invention provides a low-temperature-resistant fluorine-containing elastomer, which is formed through polymerization of the following comonomers: 40-80 mol% 1,1-vinylidene fluoride, 2-10 mol% tetrafluoroethylene, 10-30 mol% perfluoro (alkyl vinyl ether), and 1-10 mol% vulcanization monomer.

Wherein the vulcanization monomer is halogen-containing vulcanization monomer, comprising, but not limited to, halogenated trifluoroethylene, brominated alkyl vinyl ether, chlorinated isobutylene, CF₂=CFOCF₂CF₂CF₂OCF₂Br, 1-bromo-2,2-difluoroethylene, brominated trifluoroethylene, 4-bromo-1,1,2-trifluorobutene-1, 2-bromo-perfluoro (ethyl vinyl) ether, 3-bromo-perfluoro (propyl vinyl) ether, 1-bromo-3,3,4,4-tetrafluorobutene, etc., preferably CF₂=CFOCF₂CF₂CF₂OCF₂Br, 1-bromo-2,2-difluoroethylene, brominated trifluoroethylene, 4-bromo-1,1,2-trifluorobutene-1, 2-bromo-perfluoro (ethyl vinyl) ether, 3-bromo-perfluoro (propyl vinyl) ether and 1-bromo-3,3,4,4-tetrafluorobutene, most preferably CF₂=CFOCF₂CF₂CF₂OCF₂Br, 3-bromo-perfluoro(propyl vinyl) ether and 1-bromo-3,3,4,4-tetrafluorobutene.

Wherein the contents of comonomers are preferably: 50-75 mol% 1,1-vinylidene fluoride, 2-5 mol% tetrafluoroethylene, 15-30 mol% perfluoro(alkyl vinyl ether), and 2-6 mol% vulcanization monomer.

The content of 1,1-vinylidene fluoride of the present invention is selected to be 40-80 mol%, preferably 50-75 mol%. If the mole percentage of 1,1-vinylidene fluoride is less than 40%, the polymerization rate is slow, and the vulcanization effect is poor; and if the mole percentage of 1,1-vinylidene fluoride is more than 80%, it will result in reduced low temperature performance, poor compressive permanent deformation resistance and low solvent resistance of fluorine-containing elastomer.

The perfluoro (alkyl vinyl ether) is preferably perfluoro(methyl vinyl ether) or perfluoro(n-propyl vinyl ether).

The content of perfluoro (alkyl vinyl ether), which is used for providing ether bond for fluorine-containing elastomers, is 10-30 mol%, preferably 15-30 mol%.. If the content of perfluoro (alkyl vinyl ether) is too low, it will reduce low temperature performance thereof; and the higher the content is, the better the low temperature performance is. However, if the content is too high, it will reduce polymerization rate thereof and result in high cost.

The content of tetrafluoroethylene is 2-10 mol%, preferably 2-5 mol%. Tetrafluoroethylene can increase the content of fluorine, and also improve the low temperature performance thereof at the same time. Tetrafluoroethylene can improve the solvent resistance of fluorine-containing elastomer. When the content of tetrafluoroethylene is more than 10%, some polymer crystal would be generated, thus affecting the low-temperature compressive permanent deformation thereof.

The present invention also provides a method for preparing low-temperature-resistant fluorine-containing elastomer, comprising the following steps:
1) mixing water medium with emulsifier, wherein the concentration of the emulsifier in water medium is (0.01-5):100 by weight; and adjusting pH to 7-12;
2) adding mixed monomer of 1,1-vinylidene fluoride, tetrafluoroethylene, perfluoro (alkyl vinyl ether) and vulcanization monomer, and then mixing according to certain ratio to form emulsion, wherein the ratio of the mixed monomer to the water medium is (30-150) :100 by weight;
3) adding initiator, to perform polymerization under 0-110°C and 1-5 MPa, and adding chain transfer agent with maintaining constant reaction pressure during the polymerization;
4) finally, condensing the polymerized emulsion, then washing and drying.

Wherein the emulsifier in step 1) is preferably long-chain perfluorocarboxylate, such as ammonium perfluorooctanoate, sodium perfluorooctanoate or ammonium perfluoropelargonate; and the concentration of the emulsifier in the water medium is preferably (1-5): 100 by weight.

The water medium is deionized water, preferably deionized water with conductivity of less than 1 µs·cm⁻¹.

Adjusting pH in step 1) can be performed by adopting a pHregulator. The pH regulator is sodium hydroxide, borax, disodium hydrogen phosphate or dipotassium hydrogen phosphate.

The mixed monomer in step 2) comprises 40-80 mol% 1,1-vinylidene fluoride, 2-10 mol% tetrafluoroethylene, 10-30 mol% perfluoro(alkyl vinyl ether), and 1-10 mol% vulcanization monomer, preferably 50-75 mol% 1,1-vinylidene fluoride, 2-5 mol% tetrafluoroethylene, 15-30 mol% perfluoro(alkyl vinyl ether), and 2-6 mol% vulcanization monomer.

The initiator in step 3) is ammonium persulfate, potassium persulfate or sodium persulfate. The amount of the initiator is 0.001-5% of the total weight of the mixed monomer.

The temperature of the polymerization is preferably 40-100°C. If the temperature is lower than 40°C, the initiation efficiency of the initiator would be affected, and the formed fluorine-containing elastomer copolymer is easy to suffer emulsion breaking, and to cause blocking in a polymerization reactor, so that it is difficult to maintain the stabilization of the emulsion during the polymerization; and if the temperature is higher than 100°C, the consumption rate of the initiator is high, and a large number of small molecules are formed, so that it is difficult to form a dense crosslinking system through vulcanization.

The pressure of the polymerization is 1-5 MPa, preferably 1.2-4 MPa. The required polymerization pressure is maintained initially by adjusting the amount of gaseous mixed monomer. The polymerization pressure is set in the above-mentioned range. If the pressure is lower than 1 MPa, the monomer concentration of the polymerization system is too low, a satisfying reactionrate can not be achieved, and the molecular weight can not be increased effectively; and if the pressure is higher than 4 MPa, the amount of liquefied monomer in the reactor is increased, thus not only increasing the amount of consumed monomer, but also resulting in poor production efficiency. In addition, the pressure of higher than 4.0 MPa leads to high requirements of device, system and pipeline, and thereby increases production cost.

The polymerization time is controlled at 2-10 h.

The chain transfer agent is tetrachloromethane, n-hexane, acetone, diethyl malonate, diethyl succinate or ethyl acetate, methylene iodide, perfluorobutyl iodide or 1,4-diiodooctafluorobutane. The chain transfer agent is used for adjusting the molecular weight. The amount of the chain transfer agent is 0.01-5 weight % of the mixed monomer, and the chain transfer agent is added in one batch after the beginning of polymerization.

The mixed monomer gas is continuously supplemented during the polymerization process to maintain constant reaction pressure.

Bromide or iodide vulcanized part can be introduced to the terminal of fluorine-containing elastomer polymer chain during polymerization process by adopting iodinated or brominated chain transfer agent, such as methylene iodide or 1,4-diiodooctafluorobutane, while using vulcanization monomer (CSM), so as to further improve the vulcanization performance of rubber. The fluorine-containing elastomer of the present invention can simultaneously have the vulcanization functions of hydroxy vulcanizing agent such as biphenol, and organic peroxide vulcanizing agent (bis 2,5) due to the presence of brominated or iodinated groups.

In the present invention, it is easy to maintain constant pressure of the reactor during all through the polymerization period by controlling the flow rate of the mixed monomer. At early stage of the polymerization, when the polymerization rate is low, the pressure of the polymerization reactor is decreased slowly, and the staged feeding increment of the gaseous mixed monomer is very small, so as to maintain the constant pressure of the reactor. When the polymerization rate increases, the pressure of the polymerization reactor is decreased quickly, and the flow rate of the gaseous mixed monomer entering the reactor can be increased to maintain the constant pressure of the reactor. A flowmeter and a pressostat are required between the reactor and the mixed monomer source to accurately control the flow rate, thus maintaining the constant pressure of the reactor.

The condensing in step 4) is performed by adding MgCl₂ or aluminum potassium sulfate, with the dosage being 1-2 weight % of the emulsion.

The washing and the drying are performed by adopting the technologies well known in the art, comprising repeatedly washing using deionized water until the conductivity of the residual water in the elastomer is less than 5 µs·cm⁻¹, stopping washing, drying at 120°C for 18 h in a vacuum oven with vacuum degree of -0.1 MPa.

Through detection, the performance indices of the low-temperature-resistant fluorine-containing elastomer of the present invention are shown in table 1.

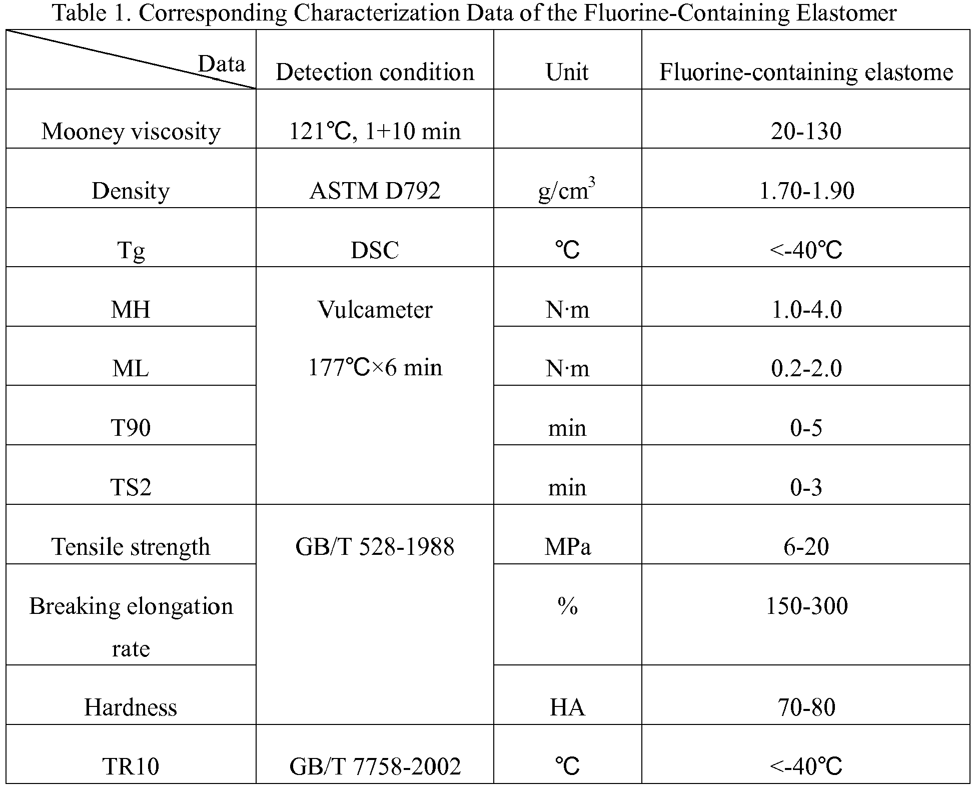

Through a large number of experiment researches, the researchers of the present invention confirm the content and composition of the comonomers of the fluorine-containing elastomer may be adjust by selections of reducing the content of tetrafluoroethylene, increasing the content of 1,1-vinylidene fluoride and increasing the dosage of vulcanization monomer, so as to improve the crystallinity thereof, enhance the elasticity thereof r, increase the vulcanization point ratio thereof, improve the crosslinking density thereof after vulcanization, and thereby significantly improving the low temperature performance thereof and making the low-temperature retraction temperature TR-10 reach <-40□. Moreover, the rate of the volume change of the fluorine-containing elastomer in methanol is decreased, and the oil resistance and the solvent resistance are improved, thus improving the oil resistance performance and the solvent resistance performance of the fluorine-containing elastomer.

### Example

The following examples are used for describing the present invention, and should not intend to limit the scope of the present invention.

### Example 1

The mixed monomer of 65 mol% 1,1-vinylidene fluoride (VDF), 3 mol% tetrafluoroethylene (TFE), 29.5 mol% perfluoro(methyl vinyl ether) (PMVE) and 2.5 mol% CF₂=CFOCF₂CF₂CF₂OCF₂Br is prepared in a mixed monomer storage tank for use.

6 L of Deionized water, 20 g of ammonium perfluorooctanoate solution and 5 g of disodium hydrogen phosphate are added into a 10 L of vertical stainless steel reactor, and pH of the polymerization system is 8. The reactor is subjected to vacuum treatment, and the content in the reactor is heated to 55°C when the oxygen content in the reactor is ≤20 ppm,. The mixed monomer prepared in the mixed monomer storage tank is added into the reactor through a diaphragm compressor until the pressure is up to 3.75 MPa. The stirring is performed at 120 r/min, and the pressure of the reactor is controlled at 3.75±0.02 MPa.

3 g of potassium persulfate is added to initiate the reaction, and 5 ml of diethyl malonate is added after the polymerization is performed. The mixed monomer prepared in the mixed monomer storage tank is continuously supplemented to maintain the constant pressure of the reactor, so as to maintain the absolute pressure in the reactor at 3.75±0.02 MPa. Reaction time is 5 h, and the polymerization reaction is stopped when the solid content of the emulsion achieves 30% (mass percentage). The reaction monomers are recovered, and the emulsion is collected in a condensation barrel. 30 g of MgCl₂ (1% of the amount of the emulsion) is added for condensing. Deionized water is used for repeatedly washing until the conductivity of the residual water in the elastomer is less than 5 µs·cm⁻¹, then the washing is stopped and the drying is performed at 120°C for 18 h in a vacuum oven with vacuum degree of -0.1 MPa to give 1.8 kg of polymer. The performance characteristic indices of the fluorine-containing elastomer are shown in table 2.

### Example 2

As described in Example 1, the mixed monomer of 65 mol% 1,1-vinylidene fluoride (VDF), 5 mol% tetrafluoroethylene (TFE), 27.5 mol% perfluoro(alkyl vinyl ether) (PMVE) and 2.5 mol% CF₂=CFOCF₂CF₂CF₂OCF₂Br is prepared in a mixed monomer storage tank for use.

The polymerization, condensing and washing are performed as in Example 1 to obtain 1.9 kg of polymer. The performance characteristic indices thereof are shown in table 2.

### Example 3

As described in Example 1, the mixed monomer of 70 mol% 1,1-vinylidene fluoride (VDF), 5 mol% tetrafluoroethylene (TFE), 22.5 mol% perfluoro(alkyl vinyl ether) (PMVE) and 2.5 mol% CF₂=CFOCF₂CF₂CF₂OCF₂Br is prepared in a mixed monomer storage tank for use. The polymerization, condensing and washing are performed as in Example 1 to obtain 1.9 kg of polymer. The performance characteristic indices thereof are shown in table 2.

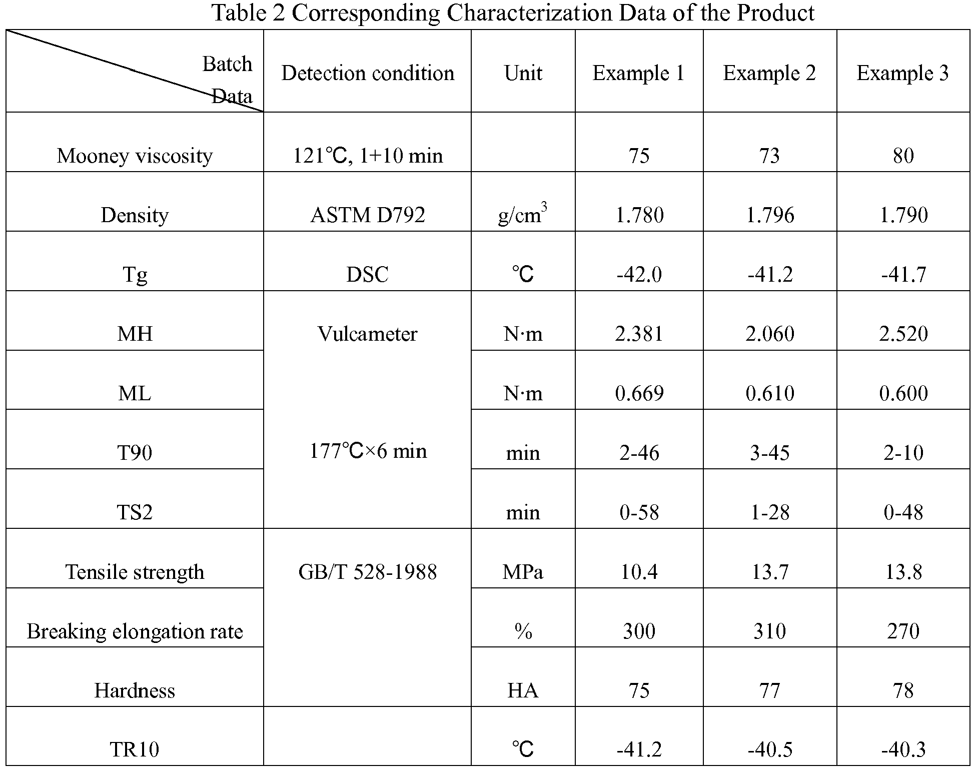

### Conclusion:

1. In the case that the dosage of vinylidene fluoride monomer is determinate, the low temperature resistant performance of the fluorine-containing elastomer can be improved by increasing the dosage of perfluoro(methyl vinyl ether) monomer.
2. In the case that the dosage of tetrafluoroethylene is determinate, if the dosage of vinylidene fluoride monomer is increased and the dosage of perfluoro(methyl vinyl ether) monomer is decreased, the low temperature performance will be reduced.

### Example 4

The mixed monomer of 70 mol% 1,1-vinylidene fluoride (VDF), 5 mol% tetrafluoroethylene (TFE), 21 mol% perfluoro(methyl vinyl ether) (PMVE) and 4 mol% CF₂=CFOCF₂CF₂CF₂OCF₂Br is prepared in a mixed monomer storage tank for use.

6 L of deionized water, 20 g of ammonium perfluorooctanoate solution, 3 g of disodium hydrogen phosphate and 0.2 g of NaOH are added into a 10 L of vertical stainless steel reactor, and pH of the polymerization system is 9. The reactor is subjected to vacuum treatment, and the content in the reactor is heated to 80°C when the oxygen content therein is ≤20 ppm. The mixed monomer prepared in the mixed monomer storage tank is added into the reactor through a diaphragm compressor until pressure is up to 3.8 MPa. The stirring is performed at 120 r/min, and the pressure of the reactor is controlled at 3.8±0.02 MPa.

3 g of potassium persulfate is added to start the reaction, and 5 ml of diethyl malonate is added after the polymerization is performed. The mixed monomer prepared in the mixed monomer storage tank is continuously supplemented to maintain the constant pressure of the reactor, so as to maintain the absolute pressure in the reactor at 3.8±0.02 MPa. Reaction time is 4 h, and the polymerization reaction is stopped when the solid content of the emulsion achieves 32% (mass percentage). Then, the reaction monomers are recovered, and the emulsion is collected in a condensation barrel. 35 g of MgCl₂ (2% of the amount of the emulsion) is added for condensing. Deionized water is used for repeatedly washing until the conductivity of the residual water in the elastomer is less than 5 µs·cm⁻¹, then the washing is stopped and the drying is performed at 120°C for 18 h in a vacuum oven with vacuum degree of -0.1 MPa to give 2 kg of polymer. The performance characteristic indices of the fluorine-containing elastomer are shown in table 3.

### Example 5

Based on Example 4, diethyl malonate is replaced with 1,4-diiodooctafluorobutane, and the dosage thereof is 6 g. The ratio of the monomers and the process are same as in Example 2. The performance characteristic indices are shown in table 3.

### Example 6

Based on Example 5, the condensing agent is replaced with aluminum potassium sulfate. The ratio of the monomers and the process are same as in Example 5. The performance characteristic indices are shown in table 3.

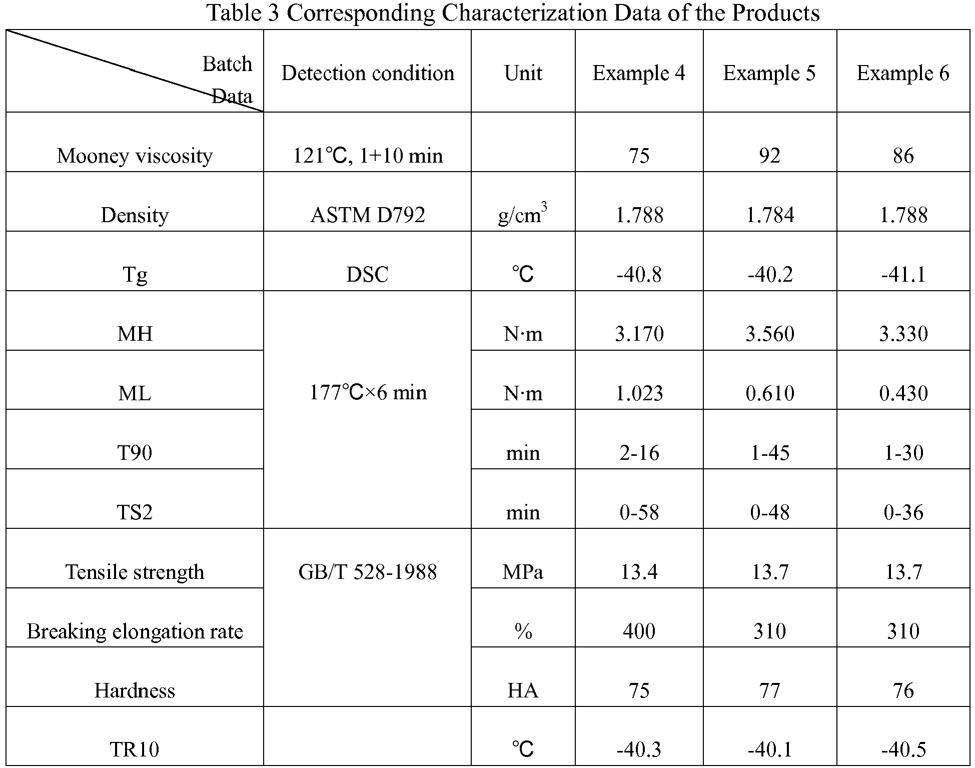

Conclusion:
1. Appropriate increase of the dosage of vulcanization monomer can improve the vulcanization performance of the low-temperature-resistant fluorine-containing elastomer, and further improve the processing performance of the product.
2. Diethyl malonate is replaced with 1,4-diiodooctafluorobutane as molecular weight regulator, such that the vulcanization performance of the product is more excellent.
3. The vulcanization performance is better while adopting aluminum potassium sulfate as post-treatment flocculant than adopting magnesium chloride.

### Example 7

The mixed monomer of 50 mol% 1,1-vinylidene fluoride (VDF), 10 mol% tetrafluoroethylene (TFE), 30 mol% perfluoro(n-propyl vinyl ether) and 10 mol% 3-bromo-perfluoro(propyl vinyl)ether is prepared in a mixed monomer storage tank for use.

6 L of Deionized water, 20 g of sodium perfluorooctanoate solution, 3 g of disodium hydrogen phosphate and 0.5 g of NaOH are added into a 10 L of vertical stainless steel reactor, and pH of the polymerization system is 10. The reactor is subjected to vacuum treatment, and the content in the reactor is heated to 90°C when the oxygen content therein is ≤20 ppm. The mixed monomer prepared in the mixed monomer storage tank is added into the reactor through a diaphragm compressor until pressure is up to 1.5 MPa. The stirring is performed at 120 r/min, and the pressure of the reactor is controlled at MPa.

2 g of sodium persulfate is added to initiate the reaction, and 4 ml of 1,4-diiodooctafluorobutane is added after the polymerization is performed. The mixed monomer prepared in the mixed monomer storage tank is continuously supplemented to maintain the constant pressure of the reactor, so as to maintain the absolute pressure in the reactor at MPa. Reaction time is 10 h, and the polymerization reaction is stopped when the solid content of the emulsion achieves 30% (mass percentage). Then, the reaction monomers are recovered, and the emulsion is collected in a condensation barrel. 10 g of MgCl₂ (1.5% of the amount of the emulsion) is added for condensing. Deionized water is used for repeatedly washing until the residual water conductivity in the elastomer is less than 5 µs·cm⁻¹, then the washing is stopped and the drying is performed at 120°C for 18 h in a vacuum oven with vacuum degree of -0.1 MPa to give 1.8 kg of polymer.

### Example 8

Based on Example 7, the polymerization pressure is increased to 3.0 Mpa, and the polymerization time is 2.5 h.

Thus, it can be judged that the reactivity ratio of the monomer can be changed and the polymerization rate can be increased by improving the polymerization pressure during the polymerization process of low-temperature-resistant fluorine-containing elastomer.

Although the present invention has been described in detail by using general description and the specific embodiments, it is obvious to a person skilled in the art to make some modifications or improvements based on the present invention. Therefore, such modifications or improvements on the basis of not departing from the spirit of the present invention are all within the protection scope of the present invention.

### Industrial applicability

The present invention provides a low-temperature-resistant fluorine-containing elastomer, which is formed through polymerization of the following comonomers: 40-80 mol% 1,1-vinylidene fluoride, 2-10 mol% tetrafluoroethylene, 10-30 mol% perfluoro(alkyl vinyl ether), and 1-10 mol% vulcanization monomer, and a preparation method thereof. In the present invention, the contents of the comonomers of the fluorine-containing elastomer are adjusted, so that the low temperature performance thereof is significantly improved, and the low-temperature retraction temperature TR-10 is <-40°C. Moreover, the rate of the volume change of the fluorine-containing elastomer in methanol decreases, and the oil resistance and the solvent resistance are improved, thereby improving the oil resistant performance and solvent resistant performance of the fluorine-containing elastomer. Therefore, the present invention possesses industrial applicability.

## Claims

1. A low-temperature-resistant fluorine-containing elastomer, **characterized by** being formed through polymerization of the following comonomers: 40-80 mol% 1,1-vinylidene fluoride, 2-10 mol% tetrafluoroethylene, 10-30 mol% perfluoro (alkyl vinyl ether), and 1-10 mol% vulcanization monomer, wherein said vulcanization monomer comprises halogenated trifluoroethylene, brominated alkyl vinyl ether, chlorinated isobutylene, CF₂=CFOCF₂CF₂CF₂OCF₂Br, 1-bromo-2,2-difluoroethylene, brominated trifluoroethylene, 4-bromo-1,1,2-trifluorobutene-1, 2-bromo-perfluoro(ethyl vinyl) ether, 3-bromo-perfluoro (propyl vinyl)ether or 1-bromo-3,3,4,4-tetrafluorobutene.

2. The low-temperature-resistant fluorine-containing elastomer according to Claim 1, wherein the contents of said comonomers comprises 50-75 mol% 1,1-vinylidene fluoride, 2-5 mol% tetrafluoroethylene, 15-30 mol% perfluoro(alkyl vinyl ether), and 2-6 mol% vulcanization monomer.

3. The low-temperature-resistant fluorine-containing elastomer according to Claim 1 or 2, wherein said vulcanization monomer is CF₂=CFOCF₂CF₂CF₂OCF₂Br, 1-bromo-2,2-difluoroethylene, brominated trifluoroethylene, 4-bromo-1,1,2-trifluorobutene-1, 2-bromo-perfluoro (ethyl vinyl) ether, 3-bromo-perfluoro (propyl vinyl) ether or 1-bromo-3,3,4,4-tetrafluorobutene, most preferably CF₂=CFOCF₂CF₂CF₂OCF₂Br, 3-bromo-perfluoro (propyl vinyl) ether or 1-bromo-3,3,4,4-tetrafluorobutene.

4. The low-temperature-resistant fluorine-containing elastomer according to any one of Claims 1-3, wherein said perfluoro (alkyl vinyl ether) is perfluoro (methyl vinyl ether) or perfluoro (n-propyl vinyl ether).

5. A method for preparing the low-temperature-resistant fluorine-containing elastomer according to any one of Claims 1-4, comprising the following steps:
1) mixing water medium with emulsifier, wherein the concentration of the emulsifier in the water medium is 0.01-5 : 100 by weight, with adjusting pH to 7-12;
2) adding mixed monomer of 1,1-vinylidene fluoride, tetrafluoroethylene, perfluoro(alkyl vinyl ether) and vulcanization monomer, and mixing according to certain ratio to form emulsion, wherein the ratio of the mixed monomer and the water medium is 30-150 : 100 by weight;
3) adding initiator perform the polymerization under 0-110°C and 1-5 MPa, adding chain transfer agent and maintaining constant reaction pressure during the polymerization;
4) finally, condensing the polymerized emulsion, then washing and drying.

6. The method according to Claim 5, wherein said emulsifier in step 1) is long-chain perfluorocarboxylate, preferably ammonium perfluorooctanoate, sodium perfluorooctanoate or ammonium perfluoropelargonate.

7. The method according to Claim 5 or 6, wherein said initiator is ammonium persulfate, potassium persulfate or sodium persulfate; and the amount of the initiator is 0.001-5 weight % of the mixed monomer.

8. The method according to any one of Claims 5-7, wherein the temperature of said polymerization is 40-100°C.

9. The method according to any one of Claims 5-8, wherein said chain transfer agent is tetrachloromethane, n-hexane, acetone, diethyl malonate, diethyl succinate or ethyl acetate, methylene iodide, perfluorobutyl iodide or 1,4-diiodooctafluorobutane; and the amount of the chain transfer agent is 0.01-5 weight % of the mixed monomer.

10. The method according to any one of Claims 5-9, wherein the constant pressure is maintained by supplementing the mixed monomer, and the reaction pressure is controlled at 1.2-4 MPa.
